# EUROPÄISCHE PATENTSCHRIFT

(11) **EP 3 426 510 B1**
(45) Veröffentlichungstag und Bekanntmachung des Hinweises auf die Patenterteilung: **16.10.2019**
(21) Anmeldenummer: 17708522.2
(22) Anmeldetag: 03.03.2017
(51) Int. Cl.: B60G 21/05, B60K 1/00, B60K 7/00

(54) **VERBUNDLENKERACHSE EINES FAHRZEUGES**
VEHICLE TORSION BEAM AXLE
ESSIEU COMPOSITE À BRAS OSCILLANT D'UN VÉHICULE

(30) Priorität: 10.03.2016 DE 102016203983
(43) Veröffentlichungstag der Anmeldung: 16.01.2019
(73) Patentinhaber: Bayerische Motoren Werke Aktiengesellschaft, 80809 München (DE)
(72) Erfinder: SEETHALER, Ludwig, 85241 Hebertshausen (DE); PRUCKNER, Alfred, 81545 Muenchen (DE); DASSLER, Maik, 07570 Harth-Pöllnitz (DE)
(86) Internationale Anmeldenummer: PCT/EP2017/055071
(87) Internationale Veröffentlichungsnummer: WO 2017/153294

(56) Entgegenhaltungen:
- DE-A1- 2 319 943
- DE-A1-102015 008 586
- FR-A1- 2 962 375
- JP-A- S60 261 717

## Beschreibung

Die Erfindung betrifft eine Verbundlenkerachse eines Fahrzeuges mit zwei Längslenkern und einem diese verbindenden Querprofil nach dem Oberbegriff des Anspruchs 1. Zum Stand der Technik wird beispielshalber auf die DE 10 2011 005 625 A1 und die FR 29 62 375 A1 verwiesen.

Verbundlenkerachsen sind aus dem Stand der Technik als eine Bauart einer Hinterachse insbesondere bei zweispurigen Fahrzeugen mit Frontantrieb bekannt. Dabei umfasst die Radaufhängung zwei im Wesentlichen in Fahrzeug-Fahrtrichtung ausgerichtete Längslenker, welche nahe ihrer vorderen fahrzeugaufbauseitigen Lagerstelle durch ein zumindest geringfügig tordierbares Querprofil miteinander verbunden sind. Verbundlenkerachsen sind üblicherweise als nicht angetriebene Achsen ausgeführt, da andernfalls eine von einem üblicherweise im Fahrzeug-Frontbereich vorgesehenen und als Brennkraftmaschine ausgebildeten Fahrzeug-Antriebsmotor zur Hinterachse führende Kardanwelle bzw. Gelenkwelle des Antriebsstrangs mit dem Querprofil der Verbundlenkerachse kollidieren könnte. Jedoch tritt dieser Bauraumkonflikt nicht bei allen Fahrzeugvarianten auf. So kann beispielsweise ein elektrischer Antriebsmotor, welcher signifikant weniger Bauraum als eine Brennkraftmaschine benötigt, im Bereich einer von diesem angetriebenen Verbundlenker-Hinterachse angeordnet sein.

So wird beispielsweise in der DE 10 2011 005 625 A1 eine angetriebene Verbundlenkerachse für ein elektrisch angetriebenes Fahrzeug vorgeschlagen, bei welchem ein Gehäuse eines Elektromotors oder eines diesem nachgeschalteten Getriebes direkt mit dem Längslenker verschraubt oder als mehrteiliges Schweißbauteil in den Längslenker integriert ist.

Die Realisierung einer angetriebenen Verbundlenkerachse, beispielsweise bei einem Elektrofahrzeug, kann dabei entweder durch einen karosseriefesten Antrieb, einen radnahen Antrieb oder einen sogenannten Radnabenantrieb geschehen. Bei einem Radnabenantrieb ist der Motor direkt in das Fahrzeugrad eingebaut. Das entstehende Antriebsmoment vom Antriebsaggregat bzw. vom Motor wird bei zentralen, karosseriefesten Antrieben an der Karosserie abgestützt, während es bei Radnabenantrieben radfest abgestützt ist.

Allgemein neigt der Aufbau bzw. die Karosserie von Fahrzeugen bei Antriebs- und Bremskräften wegen der dynamischen Radlaständerung zu Nickbewegungen. Eine Maßnahme zur Begrenzung solcher Nickbewegungen auf komfortable Werte ist das gezielte konstruktive Vorsehen von bestimmten Anfahrstützwinkeln und Bremsstützwinkeln. Diese sind die Neigungswinkel der fiktiven Geschwindigkeitsvektoren des Radaufstandspunktes oder Radmittelpunktes gegenüber der Vertikalen in Fahrzeugquerrichtung betrachtet, die sich bei einem Einfedern oder Ausfedern des Rades gegenüber der Karosserie einstellen. Bei einer konventionellen Verbundlenkerachse sind sowohl der Anfahrstützwinkel als auch der Bremsstützwinkel durch die Lage eines Längspols definiert, der in Fahrzeug-Querrichtung betrachtet etwa mit dem karosserieseitigen Längslenkerlager zusammenfällt. Der Längspol beschreibt einen virtuellen Punkt, um welchen sich der Radträger beim Einfedern und Ausfedern in Fahrzeugquerrichtung betrachtet dreht. Jedoch ergibt sich das Problem, dass aus Bauraumgründen die Länge des Längslenkers begrenzt ist und damit der Längspol nicht allzu weit von der Radmitte entfernt liegen kann. So kann entweder durch die Wahl einer niedrigeren Position des (fahrzeugaufbauseitigen) Längslenker-lagers ein günstiger Bremsstützwinkel von 25° - 30° erreicht werden, wobei sich jedoch ein unerwünschter negativer Anfahrstützwinkel ergibt. Alternativ kann eine höhere Position des Längslenker-Lagers gewählt werden, bei welchen sich ein günstiger Anfahrstützwinkel von ca. 5° einstellt, jedoch der Bremsstützwinkel deutlich über dem üblicherweise gewünschten Wert liegt. Aufgrund der gegebenen Zusammenhänge zwischen Bremsstützwinkel und Anfahrstützwinkel ist es schwer, einen Kompromiss zwischen den jeweils gewünschten Werten zu finden.

Die FR 29 62 375 A1 zeigt eine Anti-Nickvorrichtung an einer Hinterachse eines Hybrid- oder Elektrofahrzeuges, welche durch eine mechanische Verbindung in Form einer Verbindungswelle zwischen dem Elektromotor und einem Torsionsstab bzw. dem Querträger des Fahrzeuges gebildet ist und das Motordrehmoment abzustützen vermag. Die Verbindungswelle ist dabei durch drei durch Kardangelenke miteinander verbundene Wellen gebildet. Durch eine derartige Ausbildung wird zwar ein Anti-Nickeffekt allgemein erreicht, jedoch kann dadurch keine gezielte Einstellung bestimmter Anforderungen hinsichtlich eines Antriebs- und Bremsstützwinkels erreicht werden. Deren Festlegung erfolgt nämlich alleine durch die Positionierung des Längslenkerlagers, so dass sich beide Winkel nicht unabhängig voneinander wählen lassen. Damit ist eine kompromissbehaftete Festlegung der beiden Stützwinkel nicht zu vermeiden. Des Weiteren ist eine darin aufgezeigte Anti-Nickvorrichtung aufwändig in ihrer Realisierung.

Bei einer radfesten Abstützung des Antriebsmoments des Antriebsaggregats, wie es bei einem Radnabenmotor der Fall ist, ist nur mehr die Bewegungsbahn des Radaufstandspunktes maßgeblich. Dabei ergeben sich zwei Polstrahlen vom Radaufstandspunkt mit unterschiedlichen günstigen Stützwinkeln für Antrieb und Bremsung. Der Kompromiss zwischen noch ausreichender Bremskraftabstützung und gleichzeitiger Anfahrabstützung ist dabei nur dann zu erreichen, wenn der genannte Längspol und damit das Längslenkerlager unrealistisch niedrig nahe der Fahrbahn liegen. Außerdem wirkt sich die erforderliche große Länge des Längslenkers ungünstig auf das Eigenlenkverhalten der Achse unter Seitenkräften aus. Mit realisierbaren Positionen des Längslenkerlagers dagegen ist der Anfahrstützwinkel derart hoch, dass es zu störenden Ausfederbewegungen des Fahrzeugaufbaus beim Anfahren kommt.

Somit ist es Aufgabe der Erfindung, eine angetriebene Verbundlenkerachse aufzuzeigen, welche sowohl eine ausreichende Bremskraftabstützung als auch eine ausreichende Anfahrabstützung ermöglicht.

Die Lösung der Aufgabe ergibt sich mit den Merkmalen des Anspruchs 1. Vorteilhafte Aus- und Weiterbildungen sind Inhalt der Unteransprüche.

Erfindungsgemäß wird eine angetriebene Verbundlenkerachse vorgeschlagen, bei welcher das Antriebsmoment des Antriebsaggregats achsfest d.h. an der Radaufhängung und nicht wie üblich an der Karosserie oder bei Radnabenantrieb radfest abgestützt ist. Eine radfeste Abstützung des Antriebsmomentes würde nämlich zu nicht auflösbaren Zielkonflikten hinsichtlich Brems- und Anfahrabstützung führen.

Bei dem genannten Antriebsaggregat handelt es sich um einen Motor, insbesondere einen Elektromotor und/oder ein Getriebe, welches entweder direkt benachbart zum Motor angeordnet sein kann oder räumlich vom Motor getrennt in unmittelbarer Nähe zur gemeinsamen Drehachse der Räder einer erfindungsgemäßen Verbundlenkerachse angeordnet ist.

So wird vorgeschlagen, das Antriebsaggregat fahrzeugaufbauseitig gelenkig mit einem Drehfreiheitsgrad um die Fahrzeugquerachse bzw. um eine Parallelachse zur gemeinsamen Drehachse der Räder zu lagern und das Fahrzeugrad über eine beispielsweise übliche bzw. konventionelle Antriebswelle anzutreiben. Dabei ist die genannte Parallelachse von der gemeinsamen Raddrehachse oder der Drehachse der Antriebswelle beabstandet.

Erfindungsgemäß ist der genannte Drehfreiheitsgrad des am Fahrzeugaufbau gelagerten Antriebsaggregats über eine Pendelstütze abgestützt. Diese Pendelstütze verläuft in etwa in Fahrzeuglängsrichtung und verbindet das Antriebsaggregat gelenkig mit der Radaufhängung, also mit der Verbundlenkerachse.

Neben einem zentralen Antriebsaggregat wie beispielsweise einem einzigen Elektromotor sind alternativ auch zwei radnahe Antriebsaggregate denkbar, die jeweils geringfügig um die genannte Parallelachse drehbar oder schwenkbar am Fahrzeugaufbau gelagert sind.

In einer vorteilhaften Ausführung der Erfindung bildet eine die beiden Lagerungsstellen der Pendelstütze verbindende erste Gerade mit einer die antriebsaggregatseitige Lagerstelle der Pendelstütze und die fahrzeugaufbauseitige Lagerstelle des Antriebsaggregats verbindende zweite Gerade einen zumindest annähernd rechten Winkel. Unter zumindest annähernd wird konkret eine Abweichung vom rechten Winkel von +-30° verstanden.

Durch die erfindungsgemäße Konstruktion wird dem Antriebsaggregat beim Einfedern und Ausfedern eine Drehbewegung um die Fahrzeugquerachse aufgeprägt, die sich über die Antriebswelle auf den Radaufstandspunkt überträgt und dort einen gewünschten Anfahrstützwinkel erzeugt. Dieser Anfahrstützwinkel ist über die Längenverhältnisse der PendelstützenAnbindung einstellbar und damit von einem Bremsstützwinkel unabhängig. Durch die erfindungsgemäße Konstruktion kann das oben geschilderte Problem eines Kompromisses zwischen ausreichender Anfahrabstützung und Bremsabstützung auf einfache Weise behoben werden.

Die achsfeste Abstützung der Pendelstütze kann dabei entweder am Querprofil oder am Längslenker vorgesehen sein. Im Falle einer Abstützung am Längslenker befindet sich die Lagerstelle der Pendelstütze vorzugsweise in unmittelbarer Nähe einer fahrzeugaufbauseitigen Lagerstelle des Längslenkers. Diese Ausführungsform kommt insbesondere dann zur Anwendung, wenn zwei Motoren, wie beispielsweise radnahe Motoren die Hinterachse antreiben.

Im Falle eines zentralen Antriebsaggregats bzw. eines zumindest annähernd mittig zwischen den Fahrzeugrädern angeordnetes Antriebsaggregats, beispielsweise eines Elektromotors oder eines Getriebes, ist es vorteilhaft, die achsfeste Lagerung der Pendelstütze in einer Draufsicht auf das Fahrzeug, annähernd mittig an dem Querprofil abzustützen. Die mittige Abstützung wird zur Vermeidung von unerwünschten Querkräften, die bei außermittiger Abstützung in die vom Antriebsaggregat wegführenden Antriebswellen eingeleitet würden, vorgeschlagen.

Für eine besonders günstige Verteilung der Anfahrstützwinkel und Bremsstützwinkel ist es vorteilhaft, die achsfeste Lagerstelle der Pendelstütze mit einem definierten vertikalen Abstand vom fahrzeugaufbauseitigen Längslenkerlager anzubringen. Des Weiteren ist es von Vorteil, die antriebsaggregatseitige Lagerstelle der Pendelstütze in Seitenansicht des Fahrzeuges betrachtet unterhalb der Raddrehachse und die fahrzeugaufbauseitige Lagerung des Antriebsaggregats oberhalb der Raddrehachse anzuordnen. Besonders vorteilhaft ist es, wenn der Abstand zwischen der antriebsaggregatseitigen Lagerstelle der Pendelstütze und der fahrzeugaufbauseitigen Lagerstelle des Antriebsaggregats ein Mehrfaches, beispielsweise ein Dreifaches des vorstehend genannten definierten vertikalen Abstands zwischen der achsfesten Lagerung der Pendelstütze und dem Längslenkerlager beträgt.

Durch die genannte Verteilung der Abstände ergibt sich ein Bremsstützwinkel vom genannten Mehrfachen, beispielsweise Dreifachen des Anfahrstützwinkels, was bei üblichen Fahrzeugabmessungen ungefähr dem Verhältnis der idealen Stützwinkel entspricht. Bei besonders kurzen oder langen Radständen oder sehr hohen bzw. niedrigen Schwerpunkten stellen sich andere ideale Stützwinkel ein, deren Verhältnis dann das einzustellende Mehrfache des Abstandes bestimmt.

Die genannte Pendelstütze ermöglicht so, insbesondere im Gegensatz zum genannten Stand der Technik, eine Radführungsfunktion, bei welcher die Pendelstütze als radführende Momentenstütze genutzt wird und damit die dem Fachmann bekannte Raderhebungskurve beeinflusst und die Antriebs- und Bremsstützwinkel festlegt.

Bevorzugt ist dabei vorgesehen, eine gezielte und beabsichtigte Radführungsfunktion mit der Pendelstütze zu bewirken. Somit kann die Raderhebungskurve, insbesondere in der Seitenansicht des Fahrzeuges bzw. hinsichtlich der Steuerung von Längskräften bzw. der Auswirkung der Längskräfte, beeinflusst werden.

Die Pendelstütze an sich dient dabei insbesondere der Kraftübertragung als Zug- bzw. Druckstab. Durch Einstellung der genannten definierten Abstände der Anbindungsstellen der Pendelstütze zu den Lagern des Antriebsaggregats und den Lenkern bzw. durch Einstellung bestimmter Winkelverhältnisse stellen sich gewünschte (Antriebs- und Brems-)Stützwinkel ein, sodass die Pendelstütze insbesondere im Antriebsfall als Teil der Radführung wirkt. Die Momentenabstützfunktion der Pendelstütze setzt sich demnach aus der Pendelstützen-Kraftübertragung bzw. der Pendelstützenkraft und den beschrieben Abständen bzw. Winkeln zusammen.

Auch kann der Antriebs- und Bremsstützwinkel durch die Winkel- und Abstandseinstellungen gezielt und unabhängig voneinander eingestellt werden.

Die erfindungsgemäße Konstruktion dient damit als Alternative zur radfesten Anordnung eines Antriebsaggregats, wie beispielsweise einem Radnabenmotor. So können Nachteile wie beispielsweise erhöhte ungefederte Massen und eine unerwünschte Nickbewegung beim Anfahren des Fahrzeuges vermieden werden. Vielmehr ist es möglich, durch die Anordnung der genannten Pendelstütze sowohl den Bremsstützwinkel als auch den Anfahrstützwinkel in geeigneten Grenzen zu wählen und einzustellen, ohne dass die Position des Längslenkerlagers gegenüber der üblichen Anordnung wesentlich verschoben werden muss. Damit können kosten- und gewichtsintensive Eingriffe in die Karosseriestruktur vermieden werden. Auch hohe Antriebsmomente lassen sich ohne störende Nickbewegungen des Fahrzeugaufbaus übertragen und der gewünschte günstige Bremsnickausgleich der Verbundlenkerachse bleibt erhalten.

Im Folgenden wird die Erfindung anhand zweier Ausführungsbeispiele weiter erläutert, wobei die beigefügte **Figur 1** eine Radaufhängung des Fahrzeuges mit der erfindungsgemäßen Verbundlenkerachse in einer Seitenansicht und **Figur 2** diese in einer Draufsicht (auf die Fahrbahn gerichtet) zeigt. **Figur 3** zeigt eine weitere Anordnungsmöglichkeit der erfindungsgemäßen Konstruktion in einer Draufsicht auf eine Fahrzeughinterachse. Erfindungswesentlich können dabei sämtliche näher beschriebenen Merkmale sein.

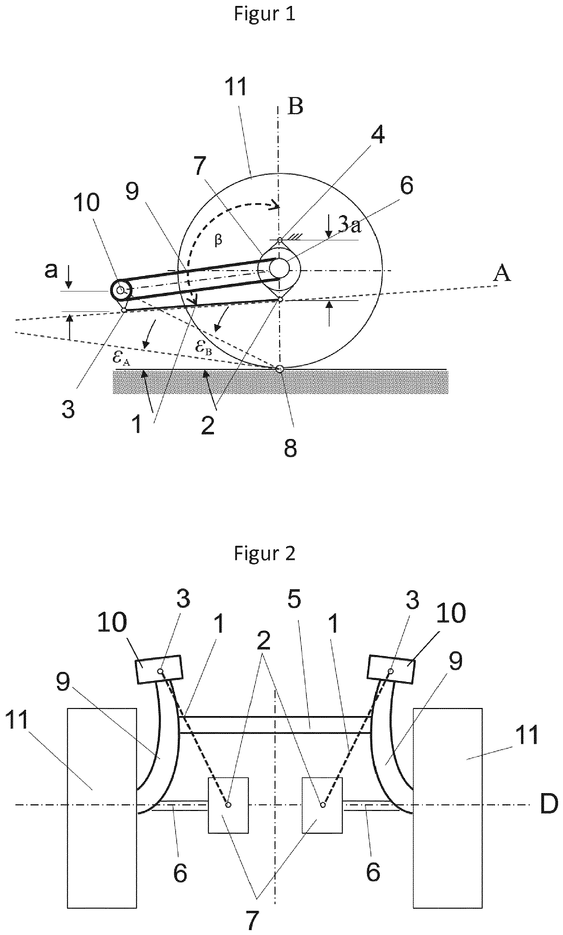

**Figur 1** beschreibt die erfindungsgemäße Verbundlenkerachse in einer Seitenansicht des Fahrzeuges. Zu erkennen sind dabei einer von zwei Längslenkern 9, ein Antriebsaggregat 7, welches über eine Antriebswelle 6 zumindest ein von der Verbundlenkerachse geführtes Rad 11 antreibt. Das die beiden Längslenker 9 verbindende Querprofil ist in dieser Ansicht nicht abgebildet. Das Antriebsaggregat 7 ist dabei in unmittelbarer Nähe der gemeinsamen Drehachse D und mit einem Drehfreiheitsgrad zu einer Parallelachse der gemeinsamen Drehachse D der Räder 11 in Konstruktionslage durch eine Lagerung 4 am Fahrzeugaufbau gelagert. Der genannte Drehfreiheitsgrad wird erfindungsgemäß durch eine Pendelstütze 1 abgestützt. Die Pendelstütze 1 ist dabei durch eine Lagerung 2 am Antriebsaggregat 7 und durch eine weitere Lagerung 3 am Längslenker 9 gelagert. Beim Einfedern und Ausfedern wird dem Antriebsaggregat 7 eine Drehbewegung um die Fahrzeugquerachse aufgeprägt, die sich über die Antriebswelle 6 auf einen Radaufstandspunkt 8 überträgt. Erfindungsgemäß bildet dabei eine die Lagerstellen 3, 2 der Pendelstütze 1 verbindende Gerade A mit einer die Lagerstellen 2, 4 verbindenden Gerade B einen Winkel β von zumindest annähernd 90° mit einer Abweichung von -+30° Der dabei entstehende Anfahrstützwinkel ε_{A} ist über die Längenverhältnisse der Pendelstützenanbindung einstellbar und damit vom Bremsstützwinkel ε_{B} unabhängig. Für eine besonders günstige Verteilung von Anfahrstützwinkel ε_{A} und Bremsstützwinkel ε_{B} ist es vorgesehen, dass die achsfeste Lagerung 3 der Pendelstütze 1 in Fahrzeugquerrichtung betrachtet in einem definierten vertikalen Abstand a von der fahrzeugaufbauseitigen Lagerstelle 10 des Längslenkerlagers 9 angeordnet ist. Außerdem ist ein weiterer vertikaler Abstand 3a von der Lagerung 2 der Pendelstütze an dem Antriebsaggregat 7 und der Lagerung 4 des Antriebaggregats vorgesehen, welcher zur Einstellung eines gewünschten Verhältnisses der Stützwinkel dreimal dem Abstand a entspricht. So ergibt sich ein Bremsstützwinkel ε_{B} etwa vom Dreifachen des Anfahrstützwinkels ε_{A}.

Die Anordnung der Pendelstütze 1 am Antriebsaggregat 7 und an der Verbundlenkerachse aus dem Ausführungsbeispiel aus Figur 1 ist in einer Draufsicht auf die Fahrzeughinterachse in **Figur 2** aufgezeigt. In diesem Falle werden die Fahrzeugräder 11 von zwei fahrzeugaufbauseitig gelagerten Antriebsaggregaten 7, beispielsweise Elektromotoren oder Getrieben angetrieben. Dabei stützt jeweils eine Pendelstütze 1 das Drehmoment des Antriebsaggregats 7 ab und ist ihrerseits in unmittelbarer Nähe der Lagerstelle 10 des Längslenkers 9 an diesem gelagert. Das Querprofil 5 verbindet dabei die beiden Längslenker 9 miteinander.

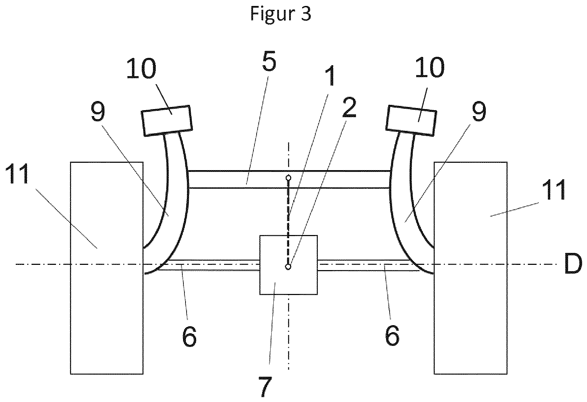

Eine weitere mögliche Anordnung der Pendelstütze 1 am Antriebsaggregat 7 wird in einer Draufsicht auf eine Fahrzeughinterachse in **Figur 3** aufgezeigt. In diesem Fall treibt ein zentral am Fahrzeugaufbau gelagertes Antriebsaggregat 7 die beiden Fahrzeugräder 11 an. Die Pendelstütze 1 stützt dabei das Antriebsaggregat 7 zentral ab und ist ihrerseits an dem Querprofil 5 gelagert. Um unerwünschte Querkräfte zu vermeiden ist die Pendelstütze 1 in Fahrzeugquerrichtung betrachtet mittig zwischen den Fahrzeugrädern 11 abgestützt.

### Bezuaszeichenliste:

- 1: Pendelstütze
- 2: Lagerung
- 3: Lagerung
- 4: Lagerung
- 5: Querprofil
- 6: Antriebswelle
- 7: Antriebsaggregat
- 8: Radaufstandspunkt
- 9: Längslenker
- 10: Lagerung
- 11: Fahrzeugrad
- D: Raddrehachse
- A: Gerade
- B: Gerade

## Patentansprüche

1. Verbundlenkerachse eines Fahrzeuges mit zwei Längslenkern (9) und einem diese verbindenden Querprofil (5) sowie mit einem Antriebsaggregat (7), welches über eine Antriebswelle (6) zumindest eines der von der Verbundlenkerachse geführten Räder (11) antreibt und welches in unmittelbarer Nähe der gemeinsamen Drehachse (D) der Räder (11) in Konstruktionslage gelagert ist und wobei das Antriebsaggregat (7) um eine Parallelachse zur gemeinsamen Drehachse der Räder (11) drehbar am Fahrzeugaufbau gelagert ist, **dadurch gekennzeichnet, dass** dieser Drehfreiheitsgrad durch eine Pendelstütze (1) abgestützt ist, welche ihrerseits achsfest abgestützt ist.

2. Verbundlenkerachse nach Anspruch 1, wobei die Pendelstütze (1) derart angeordnet ist, dass eine deren Lagerungspunkte (2, 3) verbindende erste Gerade (A) in Fahrzeugquerrichtung betrachtet mit einer zweiten die antriebsaggregatseitige Lagerstelle (2) der Pendelstütze (1) mit der fahrzeugaufbauseitigen Lagerstelle (4) des Antriebsaggregats (7) verbindenden Geraden (B) in Konstruktionslage einen zumindest annähernd rechten Winkel (β) einschließt.

3. Verbundlenkerachse nach einem der vorangegangenen Ansprüche, wobei die fahrzeugaufbauseitige Lagerung (4) des Antriebsaggregats (7) und die antriebsaggregatseitige Lagerung (2) der Pendelstütze (1) in Fahrzeugquerrichtung betrachtet auf verschiedenen Seiten einer die gemeinsame Drehachse (D) der Räder (11) enthaltenden Horizontalebene liegend, beabstandet vorgesehen sind.

4. Verbundlenkerachse nach einem der vorangegangenen Ansprüche, wobei die achsfeste Abstützung der Pendelstütze (1) am Längslenker (9) oder am am Querprofil (5) vorgesehen ist.

5. Verbundlenkerachse nach Anspruch 4, wobei die Pendelstütze (1) in unmittelbarer Nähe einer fahrzeugaufbauseitigen Lagerstelle (10) des Längslenkers (9) abgestützt ist

6. Verbundlenkerachse nach Anspruch 4, wobei im Falle eines zumindest annähernd mittig zwischen den Fahrzeugrädern (11) angeordneten Antriebsaggregats (7) die Pendelstütze (1) in Fahrzeugquerrichtung betrachtet mittig an dem Querprofil (5) abgestützt ist.

7. Verbundlenkerachse nach einem der vorangegangenen Ansprüche, wobei die achsfeste Lagerstelle (3) der Pendelstütze mit vertikalem Abstand (a) zur fahrzeugaufbauseitigen Lagerstelle (10) der Verbundlenkerachse vorgesehen ist.

8. Verbundlenkerachse nach Anspruch 7, wobei die achsfeste Lagerstelle (3) der Pendelstütze (1) in Vertikalrichtung betrachtet unterhalb der fahrzeugaufbauseitigen Lagerstelle (10) vorgesehen ist.

9. Verbundlenkerachse nach einem der vorangegangenen Ansprüche, wobei der vertikale Abstand der antriebsaggregatseitigen Lagerstelle (2) der Pendelstütze (1) zur fahrzeugaufbauseitigen Lagerstelle (4) des Antriebsaggregats (7) die dreifache Länge des vertikalen Abstands der achsfesten Lagerstelle (3) der Pendelstütze (1) zur fahrzeugaufbauseitigen Lagerstelle (10) der Verbundlenkerachse aufweist.

10. Verbundlenkerachse nach einem der vorangegangenen Ansprüche, wobei das Antriebsaggregat (7) ein einem Antriebsmotor nachgeschaltetes Getriebe ist.

## Claims

1. A vehicle torsion beam axle comprising two longitudinal links (9), a transverse profiled element (5) that connects the longitudinal links, and a drive unit (7) which drives, via an input shaft (6), at least one of the wheels (11) guided by the torsion beam axle and which is mounted in the immediate vicinity of the common axis of rotation (D) of the wheels (11) in the constructed position, and wherein the drive unit (7) is mounted on the vehicle body in such a way as to be rotatable about an axis running parallel to the common axis of rotation of the wheels (11), **characterised in that** said degree of rotational freedom is aided by a pivoted support (1), which is in turn supported fixedly on the axle.

2. A torsion beam axle according to claim 1, wherein the pivoted support (1) is arranged in such a way that, in the constructed position, a first straight line (A) connecting the mounting points (2, 3) of the pivoted support, as considered in the vehicle transverse direction, encloses an at least approximately right angle (β) with a second straight line (B) connecting the drive-unit-side mounting point (2) of the pivoted support (1) to the vehicle-body-side mounting point (4) of the drive unit (7).

3. A torsion beam axle according to any one of the preceding claims, wherein the vehicle-body-side mounting (4) of the drive unit (7) and the drive-unit-side mounting (2) of the pivoted support, as considered in the transverse direction of the vehicle, are provided lying on different sides of a horizontal plane containing the common axis of rotation (D) of the wheels (11), moreover distanced from one another.

4. A torsion beam axle according to any one of the preceding claims, wherein the pivoted support (1) is supported fixedly on the axle either at the longitudinal link (9) or at the transverse profiled element (5).

5. A torsion beam axle according to claim 4, wherein the pivoted support (1) is supported in the immediate vicinity of a vehicle-body-side mounting point (10) of the longitudinal link (9).

6. A torsion beam axle according to claim 4, wherein, in the case of a drive unit (7) arranged at least approximately centrally between the vehicle wheels (11), the pivoted support (1) is supported centrally on the transverse profiled element (5) as considered in the transverse direction of the vehicle.

7. A torsion beam axle according to any one of the preceding claims, wherein the mounting point (3), at which the pivoted support is mounted fixedly on the axle, is provided at a vertical distance (a) from the vehicle-body-side mounting point (10) of the torsion beam axle.

8. A torsion beam axle according to claim 7, wherein the mounting point (3), at which the pivoted support (1) is mounted fixedly on the axle, is provided beneath the vehicle-body-side mounting point (10) as considered in the vertical direction.

9. A torsion beam axle according to any one of the preceding claims, wherein the vertical distance of the drive-unit-side mounting point (2) of the pivoted support (1) from the vehicle-body-side mounting point (4) of the drive unit (7) is three times the length of the vertical distance of the mounting point (3), at which the pivoted support (1) is mounted fixedly on the axle, from the vehicle-body-side mounting point (10) of the torsion beam axle.

10. A torsion beam axle according to any one of the preceding claims, wherein the drive unit (7) is a transmission arranged downstream of a drive motor.

## Revendications

1. Essieu composite à bras oscillant d'un véhicule comportant deux bras longitudinaux (9) et un profilé transversal (5) qui les relie ainsi qu'une unité motrice (7), entraînant par un arbre d'entraînement (6) au moins l'une des roues (11) guidées par l'essieu composite et qui est montée au voisinage immédiat de l'axe de rotation commun (D) des roues (11) en position de construction, l'unité motrice (7) étant montée de façon à tourner sur la structure du véhicule autour d'un axe parallèle à l'axe de rotation commun des roues (11),
**caractérisé en ce que**
ce degré de liberté de rotation est soutenu par une biellette d'appui (1) qui est, de son côté, soutenue solidairement par l'essieu.

2. Essieu composite à bras oscillant selon la revendication 1,
dont la biellette d'appui (1) est montée de façon qu'une première droite (A) considérée dans la direction transversale du véhicule, reliant ses deux points de palier (2, 3) forme avec une seconde droite (B) reliant le point de palier (2) de la biellette d'appui (1) côté unité motrice, et le point de palier (4) côté structure du véhicule, de l'unité motrice (7), en position de construction, forme un angle (β) au moins voisin d'un angle droit.

3. Essieu composite à bras oscillant selon l'une des revendications précédentes,
dans lequel le palier (4) de l'unité motrice (7) côté structure du véhicule et le palier (2) de la biellette pendulaire (1), côté unité motrice selon la direction transversale, sont écartés de part et d'autre d'un plan horizontal passant par l'axe de rotation commun (D) des roues (11).

4. Essieu composite à bras oscillant selon l'une des revendications précédentes,
dans lequel l'appui de la biellette d'appui (1) solidaire de l'essieu est prévu sur le bras longitudinal (9) ou sur le profil transversal (5).

5. Essieu composite à bras oscillant selon la revendication 4,
dans lequel la biellette d'appui (1) s'appuie au voisinage immédiat d'un point de palier (10) côté structure du véhicule et appartenant au bras longitudinal (9).

6. Essieu composite à bras oscillant selon la revendication 4,
selon lequel dans le cas d'une unité motrice (7) installée au moins au voisinage du milieu entre les deux roues (11) du véhicule, la biellette d'appui (1) considérée dans la direction transversale du véhicule est appuyée au milieu sur le profilé transversal (5).

7. Essieu composite à bras oscillant selon l'une des revendications précédentes,
selon lequel le point de palier (3) solidaire de l'essieu, de la biellette d'appui est à une distance verticale (a) du point de palier (10) de l'essieu composite côté structure du véhicule.

8. Essieu composite à bras oscillant selon la revendication 7,
selon lequel le point de palier (3) de la biellette d'appui (1) solidaire de l'essieu considéré dans la direction verticale se trouve sous le point de palier (10) côté structure du véhicule.

9. Essieu composite à bras oscillant selon l'une des revendications précédentes,
selon lequel la distance verticale du point de palier (2) de la biellette d'appui (1) côté unité motrice présente, par rapport au point de palier (4) côté structure du véhicule de l'unité motrice (7), une longueur triple de la distance verticale du point de palier (3) de la biellette d'appui (1) solidaire de l'essieu par rapport au point de palier (10) de l'essieu composite côté structure du véhicule.

10. Essieu composite à bras oscillant selon l'une des revendications précédentes,
dans lequel l'unité motrice (7) est une boîte de transmission en aval d'un moteur d'entraînement.
